# EUROPÄISCHE PATENTSCHRIFT

(11) **EP 1 184 220 B1**
(45) Veröffentlichungstag und Bekanntmachung des Hinweises auf die Patenterteilung: **28.01.2004**
(21) Anmeldenummer: 01121018.4
(22) Anmeldetag: 31.08.2001
(51) Int. Cl.: B60K 1/04, B66F 9/075, B60K 1/00

(54) **Flurförderzeug**
Industrial truck
Chariot de manutention

(30) Priorität: 01.09.2000 DE 10043187
(43) Veröffentlichungstag der Anmeldung: 06.03.2002
(73) Patentinhaber: STILL WAGNER GmbH & Co KG, 72766 Reutlingen-Mittelstadt (DE)
(72) Erfinder: Prinz, Eugen, 72762 Reutlingen (DE)
(74) Vertreter: Lang, Michael (DE)

(56) Entgegenhaltungen:
- WO-A-99/10271
- FR-A- 1 572 916
- GB-A- 2 276 360
- US-A- 3 610 359

## Beschreibung

Die Erfindung betrifft ein Flurförderzeug, insbesondere Fahrersitzhubwagen oder Fahrerstandhubwagen, mit einem vorzugsweise in Querrichtung des Flurförderzeugs orientierten Fahrerplatz, wobei im Bereich des Fahrerplatzes ein Aggregateraum abgetrennt ist, in dem zumindest ein elektrischer Antriebsmotor und elektrische Bauelemente angeordnet sind. Ein derartiges Flurförderzeug ist allgemein bekannt.

Der Aggregateraum von gattungsgemäßen Flurförderzeugen ist hinsichtlich seiner Größe bestimmten Grenzen unterworfen, die sich aus den äußeren Abmessungen des Flurförderzeugs und ergonomischen Anforderungen an den Fahrerplatz des Flurförderzeugs ergeben. Gleichzeitig soll jedoch der Aggregateraum mit den darin angeordneten Bauelementen und dem Antriebsmotor für Montage-, Wartungs- und Reparaturarbeiten gut zugänglich sein.

Der vorliegenden Erfindung liegt daher die Aufgabe zugrunde, ein Flurförderzeug zur Verfügung zu stellen, bei dem in einem platzsparend ausgebildeten Aggregateraum der Antriebsmotor und die elektrischen Bauelemente gut zugänglich sind.

Diese Aufgabe wird erfindungsgemäß dadurch gelöst, dass eine Trägerplatte für elektrische Bauelemente vorgesehen ist, die oberhalb des Antriebsmotors bewegbar zwischen einer Betriebsposition und einer Wartungsposition angeordnet ist, derart, dass die Trägerplatte in der Betriebsposition im Wesentlichen waagrecht ausgerichtet ist, wobei sich die elektrischen Bauelemente auf einer Unterseite der Trägerplatte befinden, und in der Wartungsposition die elektrischen Bauelemente zugänglich sind. In der Betriebsposition sind die Bauelemente geschützt an der Unterseite der Trägerplatte angeordnet Die Trägerplatte ist dabei waagrecht oberhalb des Antriebsmotors angeordnet. Zum Durchführen von Wartungs- oder Reparaturarbeiten wird die Trägerplatte in eine Wartungsposition bewegt, in der ein ungehinderter Zugang zu den Bauelementen ermöglicht ist.

Die Trägerplatte ist um eine im Wesentlichen horizontale Achse schwenkbar angeordnet.

Dabei ist es vorteilhaft, wenn die Trägerplatte zumindest annähernd um 180° schwenkbar ist. Nach einem Schwenken der Trägerplatte, ausgehend von der Betriebsposition um 180° um eine horizontale Achse, sind alle Bauelemente frei von oben zugänglich.

Zweckmäßig ist es, wenn die Achse derart angeordnet ist, dass die Trägerplatte sich in der Wartungsposition zumindest teilweise außerhalb des Aggregateraums befindet. Dies kann beispielsweise durch eine außermittige Anordnung der Achse bezüglich der Trägerplatte erreicht werden. Die Trägerplatte ist dabei in ihrer Wartungsposition relativ zu dem Antriebsmotor seitlich versetzt, so dass auch der Antriebsmotor von oben zugänglich ist.

Eine besonders einfache elektrische Verbindung ergibt sich, wenn mindestens ein von einem Rahmen des Flurförderzeugs zu der Trägerplatte führendes Elektrokabel die Achse oder deren Verlängerung zumindest annähernd schneidet. Die zu der Trägerplatte führenden elektrischen Leitungen müssen dabei nicht längenveränderlich ausgeführt werden, sondern werden um ihren Schnittpunkt mit der Achse gedreht.

Eine besonders gute Raumausnutzung liegt vor, wenn sich der Aggregateraum unterhalb eines Fahrersitzes befindet.

Gemäß einer zweckmäßigen Ausführungsform weist dabei der Aggregateraum eine nach außen schwenkbare Tür auf. Durch Aufschwenken der Tür wird der Aggregateraum zur Seite hin geöffnet, wobei die Lage des Antriebsmotors und der Trägerplatte unverändert bleibt Anschließend kann die Trägerplatte in der oben beschriebenen Weise geschwenkt werden.

Besonders vorteilhaft ist es, wenn der Fahrersitz direkt oder indirekt an der Tür befestigt ist Der Fahrersitz, der sich in Betriebsposition oberhalb des Aggregateraums befindet und diesen nach oben hin abschließt, wird bei dieser Anordnung gemeinsam mit der Tür nach außen geschwenkt werden. Anschließend ist der Aggregateraum von oben zugänglich, so dass die Trägerplatte um ihre horizontale Achse geschwenkt werden kann.

Weitere Vorteile und Einzelheiten der Erfindung werden anhand des in den schematischen Figuren dargestellten Ausführungsbeispiels näher erläutert. Dabei zeigt
- Figur 1: den Fahrerplatz eines erfindungsgemäßen Flurförderzeugs,
- Figur 2: den Fahrerplatz mit geöffneter Tür des Aggregateraums,
- Figur 3: den Fahrerplatz mit in Wartungsposition geschwenkter Trägerplatte.

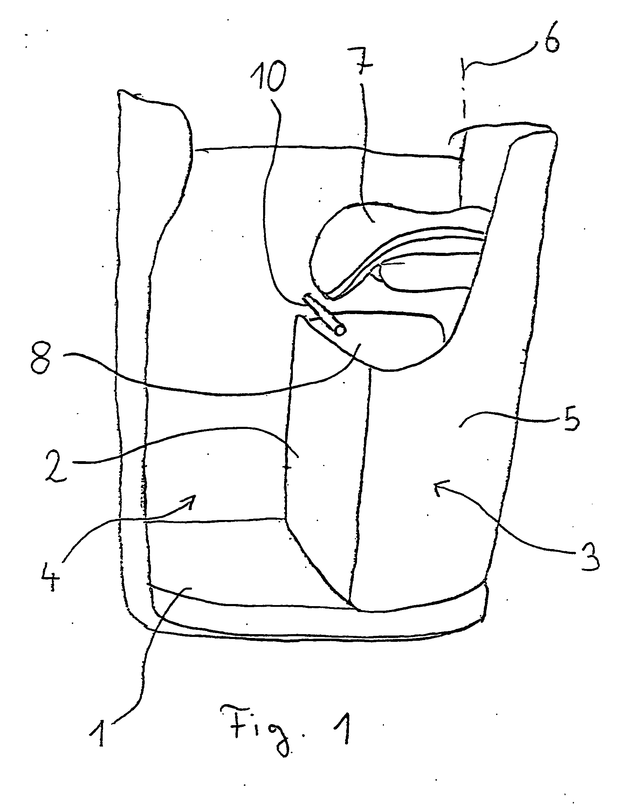

Figur 1 zeigt den Fahrerplatz eines erfindungsgemäßen Flurförderzeugs in perspektivischer Ansicht. Auf einer Bodenplatte 1 des Fahrerplatzes befindet sich eine Trennwand 2, die einen Aggregateraum 3 von einem Fußraum 4 für den Fahrer abtrennt. Zur Außenseite des Flurförderzeugs ist der Aggregateraum durch eine Tür 5 abgegrenzt, die um eine im wesentlichen senkrechte Achse 6 nach außen geschwenkt werden kann. An der Tür ist ein Fahrersitz 7 des Flurförderzeugs befestigt, der sich oberhalb des Aggregateraums befindet. Die Oberseite des Aggregateraums selbst ist durch eine Trägerplatte 8 definiert, an deren Unterseite, in der vorliegenden Ansicht nicht sichtbar, elektrische Bauelemente befestigt sind. Die Trägerplatte ist an einem fahrzeugfesten Bauteil des Flurförderzeugs um eine im wesentlichen waagrechte Achse 10 schwenkbar befestigt. Sämtliche elektrische Aggregate, insbesondere der Antriebsmotor und elektrische Bauelemente befinden sich geschützt im Inneren des Aggregateraums.

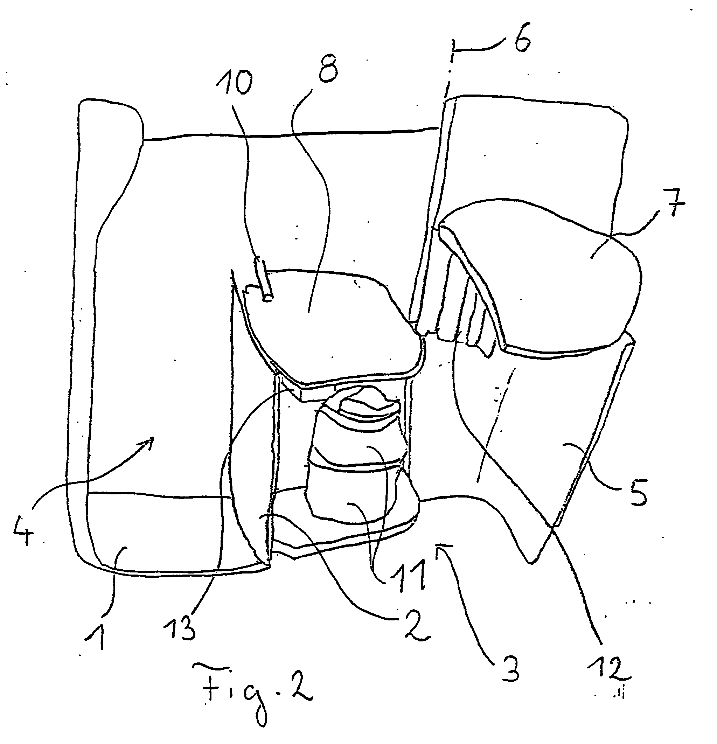

Figur 2 zeigt den Fahrerplatz mit geöffneter Tür 5 des Aggregateraums 3, wobei der Fahrersitz 7 gemeinsam mit der Tür 5 zur Seite geschwenkt ist. Der Fahrersitz 7 ist mit einer höhenverstellbaren Vorrichtung 12 an der Tür befestigt. Innerhalb des Aggregateraums 3 ist ein Antriebsmotor 11 für ein unterhalb des Aggregateraums 3 angeordnetes Rad zu erkennen, sowie ein auf der Unterseite der Trägerplatte 8 angeordnetes elektrisches Bauelement 13. Bei geöffneter Tür 5 kann die Trägerplatte 8 um die Achse 10, ausgehend von der dargestellten Betriebsposition, im Gegenuhrzeigersinn in eine Wartungsposition geschwenkt werden. Die Achse 10 kann einen Riegelmechanismus aufweisen, der ein Schwenken nur dann ermöglicht, wenn die Trägerplatte 8 zunächst einige Millimeter in Längsrichtung der Achse 10 verschoben wird. Dieses Verschieben der Trägerplatte 8 kann nur bei geöffneter Tür 5 erfolgen, wodurch ein unbeabsichtigtes Schwenken der Trägerplatte 8 verhindert wird.

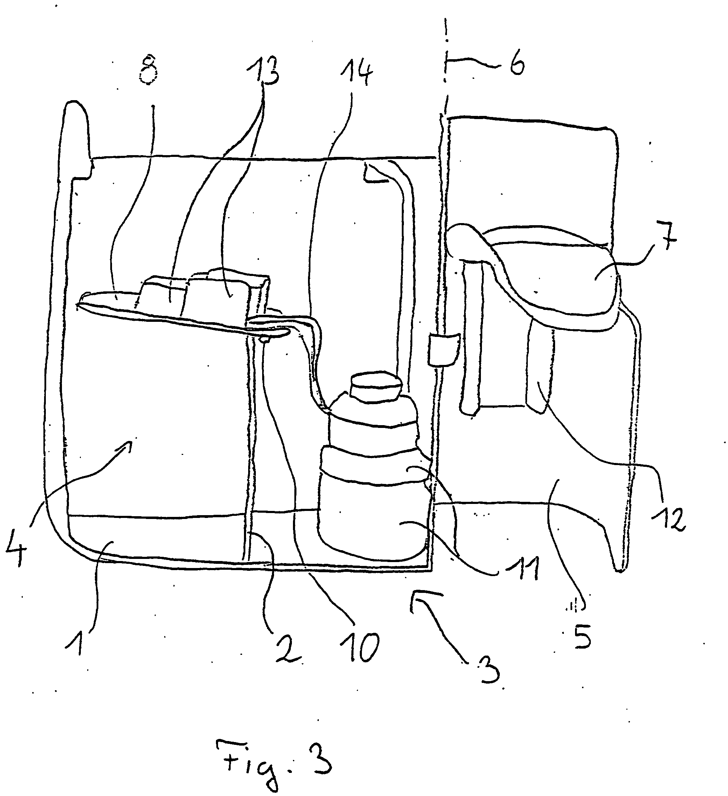

In Figur 3 ist der Fahrerplatz mit in Wartungsposition geschwenkter Trägerplatte 8 dargestellt. Zu erkennen ist, dass der Antriebsmotor 11 und die Bauelemente 13 von oben gut zugänglich sind. Die zu den Bauelementen 13 führenden elektrischen Kabel 14 sind so angeordnet, dass sie die Schwenkbewegung der Trägerplatte 8 ausgleichen können. Hierzu ist es vorteilhaft, wenn die Kabel 14 die Achse 10 oder deren Verlängerung zumindest annähernd schneiden.

## Patentansprüche

1. Flurförderzeug, insbesondere Fahrersitzhubwagen oder Fahrerstandhubwagen, mit einem vorzugsweise in Querrichtung des Flurförderzeugs orientierten Fahrerplatz, wobei im Bereich des Fahrerplatzes ein Aggregateraum (3) abgetrennt ist, in dem zumindest ein elektrischer Antriebsmotor (11) und elektrische Bauelemente (13) angeordnet sind, **dadurch gekennzeichnet, dass** eine Trägerplatte (8) für elektrische Bauelemente (13) vorgesehen ist, die oberhalb des Antriebsmotors (11) bewegbar zwischen einer Betriebsposition und einer Wartungsposition angeordnet ist, derart, dass die Trägerplatte (8) in der Betriebsposition im Wesentlichen waagrecht ausgerichtet ist, wobei sich die elektrischen Bauelemente (13) auf einer Unterseite der Trägerplatte (8) befinden, und in der Wartungsposition die elektrischen Bauelemente (13) zugänglich sind.

2. Flurförderzeug nach Anspruch 1, **dadurch gekennzeichnet, dass** die Trägerplatte (8) um eine im Wesentlichen horizontale Achse (10) schwenkbar angeordnet ist.

3. Flurförderzeug nach Anspruch 2, **dadurch gekennzeichnet, dass** die Trägerplatte (8) zumindest annähernd um 180° schwenkbar ist.

4. Flurförderzeug nach Anspruch 2 oder 3, **dadurch gekennzeichnet, dass** die Achse (10) derart angeordnet ist, dass die Trägerplatte (8) sich in der Wartungsposition zumindest teilweise außerhalb des Aggregateraums (3) befindet.

5. Flurförderzeug nach einem der Ansprüche 2 bis 4, **dadurch gekennzeichnet, dass** mindestens ein von einem Rahmen des Flurförderzeugs zu der Trägerplatte (8) führendes Elektrokabel (14) die Achse (10) oder deren Verlängerung zumindest annähernd schneidet.

6. Flurförderzeug nach einem der Ansprüche 1 bis 5, **dadurch gekennzeichnet, dass** sich der Aggregateraum (3) unterhalb eines Fahrersitzes (7) befindet.

7. Flurförderzeug nach einem der Ansprüche 1 bis 6, **dadurch gekennzeichnet, dass** der Aggregateraum (3) eine nach außen schwenkbare Tür (5) aufweist.

8. Flurförderzeug nach einem der Ansprüche 1 bis 7, **dadurch gekennzeichnet, dass** der Fahrersitz (7) direkt oder indirekt an der Tür (5) befestigt ist.

## Claims

1. Industrial truck, in particular a driver's-seat lift truck or a driver's-platform lift truck, having a driver's compartment preferably oriented in the transverse direction of the industrial truck, a unit space (3) being divided off in the region of the driver's compartment, in which at least one electric drive motor (11) and electric components (13) are arranged, **characterized in that** a carrier plate (8) for electric components (13) is provided, which is arranged above the drive motor (11) such that it can be moved between an operating position and a maintenance position, in such a way that the carrier plate (8) is aligned substantially horizontally in the operating position, the electric components (13) being located on an underside of the carrier plate (8), and the electric components (13) being accessible in the maintenance position.

2. Industrial truck according to Claim 1, **characterized in that** the carrier plate (8) is arranged such that it can be pivoted about a substantially horizontal axis (10).

3. Industrial truck according to Claim 2, **characterized in that** the carrier plate (8) can be pivoted at least approximately through 180°.

4. Industrial truck according to Claim 2 or 3, **characterized in that** the axis (10) is arranged such that the carrier plate (8) is located at least partly outside the unit space (3) when it is in the maintenance position.

5. Industrial truck according to one of Claims 2 to 4, **characterized in that** at least one electric cable (14) leading from a frame of the industrial truck to the carrier plate (8) at least approximately intersects the axis (10) or the extension of the latter.

6. Industrial truck according to one of Claims 1 to 5, **characterized in that** the unit space (3) is located underneath a driver's seat (7).

7. Industrial truck according to one of Claims 1 to 6, **characterized in that** the unit space (3) has a door (5) that can be pivoted outwards.

8. Industrial truck according to one of Claims 1 to 7, **characterized in that** the driver's seat (7) is fixed directly or indirectly to the door (5).

## Revendications

1. Chariot de manutention, en particulier chariot élévateur avec position assise du conducteur ou chariot élévateur avec station debout du conducteur, comprenant un poste de conduite orienté de préférence dans la direction transversale du chariot de manutention, un espace pour des unités (3) séparé, dans la région du poste de conduite, comprenant au moins un moteur d'entraînement électrique (11) et des composants électriques (13), **caractérisé en ce que** l'on prévoit une plaque de support (8) pour des composants électriques (13), laquelle est disposée de manière déplaçable au-dessus du moteur d'entraînement (11) entre une position de fonctionnement et une position d'entretien, de telle sorte que la plaque de support (8) soit orientée essentiellement horizontalement dans la position de fonctionnement, les composants électriques (13) se trouvant sur un côté inférieur de la plaque de support (8), et les composants électriques (13) étant accessibles dans la position d'entretien.

2. Chariot de manutention selon la revendication 1, **caractérisé en ce que** la plaque de support (8) est disposée de manière à pouvoir pivoter autour d'un axe essentiellement horizontal (10).

3. Chariot de manutention selon la revendication 2, **caractérisé en ce que** la plaque de support (8) peut pivoter au moins approximativement de 180°.

4. Chariot de manutention selon la revendication 2 ou 3, **caractérisé en ce que** l'axe (10) est disposé de telle sorte que la plaque de support (8) se trouve dans la position d'entretien au moins partiellement en dehors de l'espace pour des unités (3).

5. Chariot de manutention selon l'une quelconque des revendications 2 à 4, **caractérisé en ce qu'**au moins un câble électrique (14) conduisant d'un cadre du chariot de manutention à la plaque de support (8) coupe au moins approximativement l'axe (10) ou son prolongement.

6. Chariot de manutention selon l'une quelconque des revendications 1 à 5, **caractérisé en ce que** l'espace pour des unités (3) se trouve sous un siège du conducteur (7).

7. Chariot de manutention selon l'une quelconque des revendications 1 à 6, **caractérisé en ce que** l'espace pour des unités (3) présente une porte (5) pouvant pivoter vers l'extérieur.

8. Chariot de manutention selon l'une quelconque des revendications 1 à 7, **caractérisé en ce que** le siège du conducteur (7) est fixé directement ou indirectement à la porte (5).
